# EUROPEAN PATENT SPECIFICATION

(11) **EP 3 511 574 B1**
(45) Date of publication and mention of the grant of the patent: **03.08.2022**
(21) Application number: 19151033.8
(22) Date of filing: 09.01.2019
(51) Int. Cl.: F04D 13/06, F04D 29/42, F04D 29/62

(54) **PUMP ASSEMBLY WITH GAP SLEEVE AND COUPLING BETWEEN ROTOR AND GAP SLEEVE**
PUMPENANORDNUNG MIT SPALTHÜLSE UND KOPPLUNG ZWISCHEN ROTOR UND SPALTHÜLSE
ENSEMBLE DE POMPE À CHEMISE D'ENTREFER ET COUPLAGE ENTRE ROTOR ET CHEMISE D'ENTREFER

(30) Priority: 10.01.2018 IT 201800000658
(43) Date of publication of application: 17.07.2019
(73) Proprietor: Dab Pumps S.p.A., 35035 Mestrino (Padova) (IT)
(72) Inventor: SINICO, Francesco, 36075 MONTECCHIO MAGGIORE VI (IT); CAILOTTO, Pietro, 36070 TRISSINO VI (IT); TRENTIN, Enrico, 36053 GAMBELLARA, Frazione Sorio VI (IT); DI GIOVANNI, Giuseppe, 35030 SELVAZZANO DENTRO PD (IT); CAPPOCCHIN, Michele, 35035 MESTRINO PD (IT)
(74) Representative: Tiburzi, Andrea

(56) References cited:
- EP-A1- 0 987 441
- EP-A2- 0 963 029
- EP-A2- 1 372 248
- WO-A1-2008/141703

## Description

The present invention relates to a centrifugal pump assembly with electric motor.

Centrifugal pump assemblies are currently known which are composed substantially of a hollow body provided with intake and delivery ducts and containing one or more impellers interleaved by diffusers and keyed on the shaft of an electric motor which is inserted at least partially in a gap sleeve.

The rotor of the electric motor is arranged on said shaft, while the stator of the electric motor is accommodated on the outside of the sleeve.

Such shaft is supported generally by at least two bearings.

The gap sleeve normally has one end which faces the impeller which is closed by an end element in the section that is closest to the impeller.

The end element is also used to couple the shaft to the gap sleeve, ensuring adequate centering of the shaft, adapted to render it able to rotate within the sleeve.

These known methods have drawbacks and aspects that can be improved.

The end element that closes the gap sleeve is provided in such a manner that it can be removed easily in case of inadequate centering of the shaft.

To be optionally removed, the end element is inserted only partially in the gap sleeve, but this causes a difficult centering of the shaft and an expenditure of time during assembly due to the need to check the free rotation of the shaft.

As an alternative, the end element that closes the gap sleeve is provided so that it is inserted fully in the sleeve so as to generate interference with the walls in order to fix the centering of the shaft. Such a solution is shown in WO 2008/141703 A1.

However, in this type of pump the end element that closes the sleeve cannot be removed easily and this causes inconvenience during assembly in case of inadequate centering, since the end element must be removed with effort and then inserted again.

The aim of the present invention is to provide a centrifugal pump assembly that is capable of improving the background art in one or more of the aspects indicated above.

Within this aim, an object of the invention is to provide a centrifugal pump assembly that allows more convenient coupling between the shaft and the gap sleeve.

Another object of the invention is to provide a centrifugal pump assembly that allows faster and better shaft centering and better balancing of the shaft with respect to known pump assemblies.

A further object of the present invention is to overcome the drawbacks of the background art in a manner that is alternative to any existing solutions.

Not least object of the invention is to provide a pump assembly that is highly reliable, relatively easy to provide and at competitive costs.

This aim, as well as these and other objects which will become better apparent hereinafter, are achieved by a centrifugal pump assembly according to claim 1.

Further characteristics and advantages of the invention will become better apparent from the description of a preferred but not exclusive embodiment of the centrifugal pump assembly according to the invention, illustrated by way of nonlimiting example in the accompanying drawings, wherein:

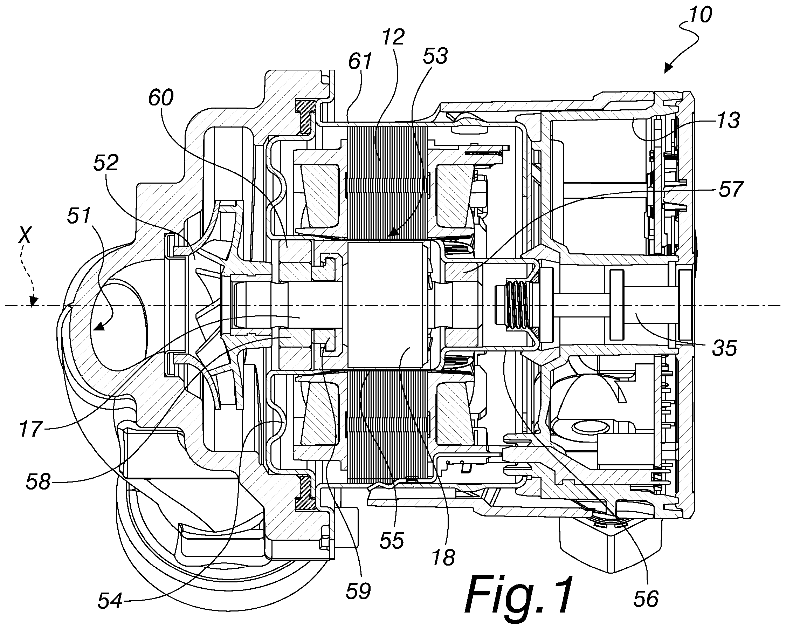

Figure 1 is a sectional view of a centrifugal pump assembly according to the invention;

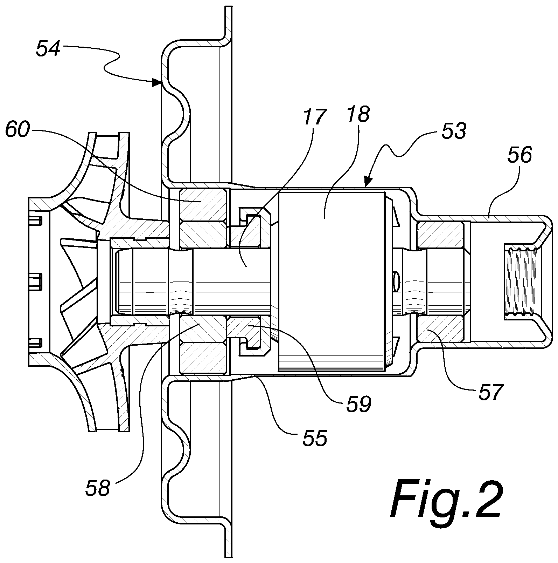

Figure 2 is a sectional view of a detail of the centrifugal pump of Figure 1.

With reference to the cited figures, the centrifugal pump assembly, with electric motor according to the invention, is designated generally by the reference numeral 10.

The centrifugal pump assembly 10 comprises a wet section 51 which is provided with intake and delivery ducts and with a volute, of a known type, which are not visible in the figures, and an impeller 52, of a known type, which is immersed in said wet section.

The impeller 52 is keyed on a shaft 17 of an electric motor which is composed of a stator 12 and a rotor 18.

The pump assembly 10 comprises a gap sleeve 53.

The gap sleeve is constituted by a tubular body section 55, which is provided with a flanged end 54 which is faced by said impeller 52, and a tubular end 56, in which the cross-section tapers with respect to the cross-section of the body 55 and the diameter is smaller than the diameter of the body 55.

The tubular end 56 is adapted for the partial insertion of a plug 35.

The gap sleeve 53 has an extension axis X, which coincides with the extension axis of the pump body, which coincides with the axis of rotation of the rotor 18 and of the impeller 52.

Advantageously, the axis of extension of the gap sleeve 53 might not coincide with the axis of extension of the pump body.

The stator 12 of said electric motor is arranged on the outside of said gap sleeve 53, in the tubular body section 55.

The rotor 18 is inserted within said gap sleeve 53, in the tubular body section 55 and at said stator 12, and is fixed to said shaft 17, which can rotate in the gap sleeve 53.

The shaft 17 is supported at one end, accommodated in the end 56 of said gap sleeve 53, by a first bearing 57, and at the opposite end of the gap sleeve 53, which is proximate to the flanged end 54, by a second bearing 58 that has a larger diameter than the first bearing.

According to the invention, the gap sleeve 53 is provided monolithically starting from stamped stainless steel and the receptacles of the bearings 57 and 58, having different diameters, are provided by chip-forming machining.

The second bearing 58 is supported by an annular shoulder element 59.

A particularity of the invention resides in that the gap sleeve 53 is closed by an annular fixing element 60, which surrounds the second bearing 58 and is inserted fully within the gap sleeve 53, proximate to the flanged end 54. The annular element 60 is made of brass. Advantageously, the annular fixing element 60 can also be made of another material, for example sintered material.

The stator 12 is closed externally by a casing 61.

In particular, the casing 61 is cup-shaped, its base being proximate to the free tip of the tubular end of the gap sleeve 53.

A method for assembling the motor for the pump assembly 10, which is not a part of the claimed invention, is as follows.

The rotor 18, fixed to the shaft 17, is inserted in the gap sleeve 53, in which it can rotate by virtue of the presence of the bearings 57 and 58.

The sleeve 53 is closed, at the height of the flanged end 54, by arranging the annular fixing element 60 around the bearing 58, the one that has a larger diameter, and inserting it fully in the sleeve 53.

The gap sleeve 53, with the rotor enclosed inside it, is then inserted in the casing 61 of the stator 12.

It should be noted that the presence of the annular closure element 60 of the gap sleeve 53, fully inserted therein and surrounding the end bearing 58, allows rapid and effective centering of the shaft 17 and better balancing.

In practice it has been found that the invention achieves the intended aim and objects, providing a centrifugal pump assembly according to claim 1.

The invention thus conceived is susceptible of numerous modifications and variations, and the scope of the invention is solely defined by the following claims.

## Claims

1. A centrifugal pump assembly (10), with electric motor, comprising an impeller (52) and a gap sleeve (53), provided with a flanged end (54) which faces said impeller (52), outside of which a stator (12) of the motor is arranged, and inside which a rotor (18) of the motor is inserted, fixed to a driving shaft (17), which can rotate within said gap sleeve (53) and is supported at one end by a first bearing (57) and at the opposite end, proximate to the flanged end (54), by a second bearing (58), said gap sleeve (53) is being closed by an annular element (60), which surrounds said second bearing (58), inserted entirely within said gap sleeve (53), proximate to said flanged end (54), **characterized in that** said gap sleeve (53) is made of a monolithic stamped steel body, and receptacles of said bearings (57, 58) within said gap sleeve (53) are provided by chip-forming machining.

2. The pump assembly (10) according to claim 1, **characterized in that** said gap sleeve (53) is constituted by a tubular body section (55), which has a tubular end (56), with a cross-section that is reduced with respect to the cross-section of the tubular body (55).

3. The pump assembly (10) according to claim 2, **characterized in that** said tubular end (56) of said gap sleeve (53) is adapted for the partial insertion of a plug (35).

## Patentansprüche

1. Kreiselpumpenanordnung (10) mit Elektromotor, umfassend ein Laufrad (52) und eine Spalthülse (53), die mit einem Flanschende (54) versehen ist, das dem Laufrad (52) zugewandt ist, außerhalb dessen ein Stator (12) des Motors angeordnet ist und in das ein Rotor (18) des Motors eingesetzt ist, der an einer Antriebswelle (17) befestigt ist, die sich in der Spalthülse (53) drehen kann und an einem Ende durch ein erstes Lager (57) gelagert ist und an dem gegenüberliegenden Ende proximal zu dem gegenüberliegenden Ende (54) durch ein zweites Lager (58) gelagert ist, wobei die Spalthülse (53) durch ein ringförmiges Element (60) geschlossen ist, das das zweite Lager (58) umgibt, das vollständig in die Spalthülse (53) proximal zu dem Flanschende (54) eingesetzt ist, **dadurch gekennzeichnet, dass** die Spalthülse (53) aus einem monolithischen gestanzten Stahlkörper gefertigt ist und Aufnahmen der Lager (57, 58) in der Spalthülse (53) durch spanabhebende Bearbeitung bereitgestellt sind.

2. Pumpenanordnung (10) nach Anspruch 1, **dadurch gekennzeichnet, dass** die Spalthülse (53) durch einen rohrförmigen Körperabschnitt (55) gebildet ist, der ein rohrförmiges Ende (56) mit einem Querschnitt aufweist, der in Bezug auf den Querschnitt des rohrförmigen Körpers (55) reduziert ist.

3. Pumpenanordnung (10) nach Anspruch 2, **dadurch gekennzeichnet, dass** das rohrförmige Ende (56) der Spalthülse (53) zum teilweisen Einsetzen eines Stopfens (35) angepasst ist.

## Revendications

1. Ensemble pompe centrifuge (10), avec un moteur électrique, comprenant une turbine (52) et un manchon d'espacement (53), muni d'une extrémité à bride (54) qui fait face à ladite turbine (52), à l'extérieur de laquelle un stator (12) du moteur est disposé, et à l'intérieur de laquelle un rotor (18) du moteur est inséré, fixé à un arbre d'entraînement (17), qui peut tourner à l'intérieur dudit manchon d'espacement (53) et est supporté à une extrémité par un premier palier (57) et à l'extrémité opposée, à proximité de l'extrémité à bride (54), par un deuxième palier (58), ledit manchon d'espacement (53) étant fermé par un élément annulaire (60), qui entoure ledit deuxième palier (58), inséré entièrement à l'intérieur dudit manchon d'espacement (53), à proximité de ladite extrémité à bride (54), **caractérisé en ce que** ledit manchon d'espacement (53) est constitué d'un corps monolithique en acier estampé, et les réceptacles desdits paliers (57, 58) à l'intérieur dudit manchon d'espacement (53) sont fournis par usinage par formation de copeaux.

2. Ensemble pompe (10) selon la revendication 1, **caractérisé en ce que** ledit manchon d'espacement (53) est constitué par une section de corps tubulaire (55), qui a une extrémité tubulaire (56), avec une section transversale qui est réduite par rapport à la section transversale du corps tubulaire (55).

3. Ensemble pompe (10) selon la revendication 2, **caractérisé en ce que** ladite extrémité tubulaire (56) dudit manchon d'espacement (53) est adaptée pour l'insertion partielle d'une prise (35).
